# FASCICULE DE BREVET EUROPEEN

(11) **EP 0 914 571 B1**
(45) Date de publication et mention de la délivrance du brevet: **29.01.2003**
(21) Numéro de dépôt: 98928375.9
(22) Date de dépôt: 28.05.1998
(51) Int. Cl.: F16F 15/123

(54) **DISPOSITIF AMORTISSEUR DE TORSION, NOTAMMENT POUR FRICTION D'EMBRAYAGE DE VEHICULE AUTOMOBILE**
VORRICHTUNG ZUM DÄMPFEN VON DREHSCHWINGUNGEN, INSBESONDERE KUPPLUNGSSCHEIBE FÜR KRAFTFAHRZEUG
TORSIONAL DAMPER, IN PARTICULAR FOR MOTOR VEHICLE FRICTION CLUTCH

(30) Priorité: 30.05.1997 FR 9706657
(43) Date de publication de la demande: 12.05.1999
(73) Titulaire: VALEO EMBRAYAGES s.a.s., 80009 Amiens Cedex 1 (FR)
(72) Inventeur: GRATON, Michel, F-75020 Paris (FR); TAUVRON, Fabrice, F-91200 Athis-Mons (FR)
(74) Mandataire: Gamonal, Didier
(86) Numéro de dépôt international: FR9801068
(87) Numéro de publication internationale: WO98054487

(56) Documents cités:
- EP-A- 0 732 525
- DE-A- 19 642 913
- DE-U- 29 611 793
- FR-A- 2 531 162
- FR-A- 2 735 548
- US-A- 4 852 711

## Description

L'invention concerne les dispositifs amortisseurs de torsion du type de ceux mis en oeuvre par exemple pour la constitution d'une friction d'embrayage pour véhicule automobile.

Ces dispositifs amortisseurs de torsion sont usuellement du genre comportant, globalement, entre un élément d'entrée et un élément de sortie montés rotatifs l'un par rapport à l'autre, deux amortisseurs, qui, cinématiquement, entrent successivement en action lors d'un débattement angulaire entre l'élément d'entrée et l'élément de sortie, à savoir, dans l'ordre inverse de leurs entrées en action, un amortisseur principal et un préamortisseur, chacun de ces amortisseurs comportant deux rondelles de guidage, qui, disposées axialement de part et d'autre d'un voile, sont montées rotatives par rapport à celui-ci, des organes élastiques à action circonférentielle, qui sont interposés circonférentiellement entre les rondelles de guidage et le voile, et des moyens de frottement, qui, intervenant entre les rondelles de guidage et le voile ou des pièces solidaires en rotation de ceux-ci, sont soumis à des moyens élastiques à action axiale.

Pour la constitution d'une friction d'embrayage, l'élément d'entrée est, par exemple, un disque qui, à sa périphérie, est porteur de garnitures de frottement par lesquelles il est destiné à être serré entre le plateau de pression et le plateau de réaction de l'embrayage correspondant, et, corollairement, l'élément de sortie est, par exemple, un moyeu, qui, lui, est destiné à être calé en rotation sur l'arbre d'entrée d'une boîte de vitesses.

Les amortisseurs ont à charge de filtrer les vibrations dues au moteur, au ralenti pour ce qui concerne le préamortisseur, et en marche normale pour ce qui concerne l'amortisseur principal.

Pour satisfaire à des situations particulières de fonctionnement, il a été proposé, dans le document FR-A-2 735 548 auquel la présente demande de brevet se réfère, de prévoir un troisième amortisseur, ou amortisseur intermédiaire, dont l'entrée en action se fait après celle du préamortisseur et avant celle de l'amortisseu principal.

L'invention a pour but de réduire l'encombrement axial d'un dispositif amortisseur de torsion comportant un tel amortisseur intermédiaire.

Plus précisément, elle a pour objet un dispositif amortisseur de torsion, qui est du genre succinctement exposé ci-dessus, et qui comporte un amortisseur intermédiaire, ce dispositif amortisseur de torsion étant d'une manière générale caractérisé en ce que les moyens élastiques à action axiale de cet amortisseur intermédiaire sont disposés radialement entre ses organes élastiques à action circonférentielle et ceux du préamortisseur.

Ainsi, ces moyens élastiques à action axiale ne nécessitent, axialement, pour leur implantation, aucun espacement particulier, au bénéfice, avantageusement, de l'encombrement axial de l'ensemble.

Avantageusement, le préamortisseur et l'amortisseur intermédiaire étant l'un et l'autre disposés axialement d'un même côté du voile de l'amortisseur principal, tandis que, de l'autre côté de ce voile, interviennent des moyens de frottement, dits ici premiers moyens de frottement, qui appartiennent aux moyens de frottement de l'amortisseur principal, et des moyens de frottement, dits ici troisièmes moyens de frottement, qui appartiennent aux moyens de frottement du préamortisseur et qui sont décalés radialement par rapport aux premiers moyens de frottement, la rondelle de guidage correspondante de l'amortisseur principal comporte, préférentiellement, suivant l'invention, entre lesdits premiers moyens de frottement et lesdits troisièmes moyens de frottement, une portion annulaire qui est décalée axialement en direction du voile de l'amortisseur principal.

Ainsi se trouve avantageusement ménagé, en creux, à la surface de la rondelle de guidage concernée de l'amortisseur principal, un dégagement susceptible de faciliter l'intervention, à ce niveau, d'un quelconque autre organe extérieur au dispositif amortisseur de torsion, et, par exemple, celle du dispositif de commande usuellement associé à un embrayage pour la commande en engagement et en dégagement de celui-ci.

Ainsi, l'implantation du dispositif amortisseur de torsion suivant l'invention dans un environnement toujours plus ou moins encombré se trouve avantageusement facilitée.

Les caractéristiques et avantages de l'invention ressortiront d'ailleurs de la description qui va suivre, à titre d'exemple, en référence aux dessins schématiques annexés sur lesquels :
la figure 1 est une vue en coupe axiale d'un dispositif amortisseur de torsion ;
la figure 2 reprend, à échelle supérieure, le détail de la figure 1 repéré par un encart II sur cette figure 1.

Sur ces figures, on reconnaît un dispositif amortisseur de torsion 10 du type de celui décrit dans le document FR-A-2 735 548 mentionné ci-dessus.

Ce dispositif amortisseur de torsion 10 ne sera donc pas décrit dans tous ses détails ici.

Le dispositif amortisseur de torsion 10 comporte, globalement, entre un élément d'entrée 11 et un élément de sortie 12 montés rotatifs l'un par rapport à l'autre, trois amortisseurs A, B, C, qui, cinématiquement, entrent successivement en action lors d'un débattement angulaire entre l'élément d'entrée 11 et l'élément de sortie 12, à savoir, dans l'ordre inverse de leurs entrées en action, un amortisseur principal A, un amortisseur intermédiaire B, et un préamortisseur C.

S'agissant, ici, de la constitution d'une friction d'embrayage pour véhicule automobile, l'élément d'entrée 11 comporte, ici, un disque 13, qui, ici, porte, annulairement, à sa périphérie, et sur l'une et l'autre de ses faces, des garnitures de frottement 14.

Corollairement, l'élément de sortie 12 est, ici, un moyeu, qui, intérieurement, présente des cannelures 15 et qui, extérieurement, comporte, à l'une de ses extrémités, une portion de hauteur réduite 16, et, à l'autre de ses extrémités, une portée tronconique 17, avec, dans l'intervalle, des cannelures 18.

Du côté de la portion de hauteur réduite 16, l'élément de sortie 12 présente un épaulement transversal 19 avec lequel la tranche d'extrémité correspondante des cannelures 18 se trouve en continuité.

Chacun des amortisseurs A, B, C comportent deux rondelles de guidage, respectivement 20A-21A, 20B-21B, 20C-21C, qui, disposées axialement de part et d'autre d'un voile, respectivement 22A, 22B, 22C, sont montées rotatives par rapport à celui-ci dans les limites d'un débattement angulaire déterminé, des organes élastiques à action circonférentielle, respectivement 23A, 23B, 23C, qui sont interposés circonférentiellement entre les rondelles de guidage 20A-21A, 20B-21B, 20C-21C et le voile 22A, 22B, 22C, et des moyens de frottement, respectivement 25A, 25B, 25C, qui, intervenant entre les rondelles de guidage 20A-21A, 20B-21B, 20C-21C et le voile 22A, 22B, 22C ou des pièces solidaires en rotation de ceux-ci, sont soumis à des moyens élastiques à action axiale, respectivement 26A, 26B, 26C. Les organes élastiques 26A, 26B, 26C sont montés de préférence sous précontrainte pour réduction des bruits.

Ici, les rondelles de guidage 20A, 21A de l'amortisseur principal A sont solidarisées l'une à l'autre, et maintenues à une distance déterminée l'une de l'autre, par des entretoises 27, qui interviennent à leur périphérie, et à la faveur desquelles le disque 13 porteur des garnitures de frottement 14 est solidarisé à la rondelle de guidage 20A.

Ces entretoises 27 traversent, avec un jeu circonférentiel, des échancrures 28 prévues à cet effet à la périphérie externe du voile 22A, et, par coopération en butée avec les extrémités des échancrures 28, elles définissent les limites du débattement angulaire des rondelles de guidage 20A, 21A par rapport au voile 22A.

A sa périphérie interne, le voile 22A comporte, également, des échancrures 29, par lesquelles il engrène, avec un jeu circonférentiel, avec les cannelures 18 de l'élément de sortie 12.

Les organes élastiques à action circonférentielle 23A de l'amortisseur principal A sont implantés, pour partie, dans des fenêtres 30 des rondelles de guidage 20A, 21A, et, pour partie, dans des fenêtres 31, en vis-à-vis, du voile 22A.

Ils sont ici chacun constitués de deux ressorts hélicoïdaux coaxiaux allongés sensiblement tangentiellement à une circonférence de l'ensemble.

L'amortisseur intermédiaire B et le préamortisseur C sont ici l'un et l'autre disposés axialement d'un même côté du voile 22A de l'amortisseur principal A, entre ce voile 22A et la rondelle de guidage 20A.

Ils sont donc l'un et l'autre implantés axialement entre les rondelles de guidage 20A, 21A de l'amortisseur principal A.

L'amortisseur intermédiaire B, qui entoure globalement le préamortisseur C, est implanté radialement en majeure partie en dessous, c'est-à-dire en deçà, des organes élastiques à action circonférentielle 23A de l'amortisseur principal A.

Sa rondelle de guidage 21B est formée par le voile 22A de l'amortisseur principal A, et, plus précisément, par la portion radialement la plus interne de ce voile 22A.

Sa rondelle de guidage 20B est une pièce en matière synthétique, ou pièce de confinement, disposée axialement au contact de la rondelle de guidage 20A de l'amortisseur principal A.

Cette rondelle de guidage 20B, qui est la rondelle de guidage de l'amortisseur intermédiaire B la plus éloignée, axialement, du voile 22A de l'amortisseur principal A, présente, axialement, des tenons 33 par lesquels elle est calée en rotation sur ce voile 22A, ces tenons 33 étant en prise avec des encoches 34 prévues à cet effet en bordure des fenêtres 31 de ce voile 22A.

Avantageusement, les tenons 33 traversent de part en part le voile 22A, et, conformés en crochets élastiquement déformables 35 au-delà de ce voile 22A, ils sont aptes à un encliquetage sur celui-ci, pour la formation d'un sous-ensemble avec lui.

Ce sous-ensemble ne relevant pas de la présente invention, il ne sera pas décrit plus en détail ici.

A sa périphérie interne, le voile 22B comporte des échancrures 36 par lesquelles il engrène, avec un jeu circonférentiel, avec les cannelures 18 de l'élément de sortie 12, mais le jeu correspondant est moindre que celui du voile 22A de l'amortisseur principal A.

Les organes élastiques à action circonférentielle 23B de l'amortisseur intermédiaire B sont engagés, pour partie, dans des creusures 37 de la rondelle de guidage 20B et dans des fenêtres 38 de la rondelle de guidage 21B, et, pour partie, dans des fenêtres 39, en vis-à-vis, du voile 22B.

Ils sont ici chacun constitués de deux ressorts hélicoïdaux coaxiaux allongés sensiblement tangentiellement à une circonférence de l'ensemble.

Ici, les limites du débattement angulaire entre les rondelles de guidage 20B, 21B de l'amortisseur intermédiaire B et le voile 22B de celui-ci sont définies par la venue en butée des extrémités circonférentielles des échancrures 29 du voile 22A de l'amortisseur principal A avec les cannelures 18 de l'élément de sortie 12.

L'une des rondelles de guidage 20C, 21C du préamortisseur C est ici formée par le voile 22B de l'amortisseur intermédiaire B, et, plus précisément, par la portion radialement la plus interne de ce voile 22B.

Il s'agit, ici, de la rondelle de guidage 21C qui est axialement la plus proche du voile 22A de l'amortisseur principal A.

Pour leur solidarisation en rotation l'une à l'autre, l'une des rondelles de guidage 20C, 21C, ici la rondelle de guidage 21C, comporte, circonférentiellement à distance des organes élastiques à action circonférentielle 23B de l'amortisseur intermédiaire B, et radialement au-delà du voile 22C, des pattes axiales 40, par lesquelles elle est en prise avec des encoches 41 de l'autre rondelle de guidage 20C, 21C, ici la rondelle de guidage 20C.

Ici, les pattes axiales 40 de la rondelle de guidage 21C s'étendent en direction de la rondelle de guidage 20A de l'amortisseur principal A, et les encoches 41 de la rondelle de guidage 20C sont prévues à la périphérie externe de celle-ci.

Ici, le voile 22C du préamortisseur C est solidaire en rotation de l'élément de sortie 12, en étant engagé, et serti, à sa périphérie interne, sur une portion de hauteur réduite des cannelures 18 de cet élément de sortie 12.

Les organes élastiques à action circonférentielle 23C du préamortisseur C sont engagés, pour partie, dans des fenêtres 43 des rondelles de guidage 20C, 21C, et, pour partie, dans des fenêtres 44, en vis-à-vis, du voile 22C.

Ils sont ici chacun constitués par un ressort hélicoïdal allongé sensiblement tangentiellement à une circonférence de l'ensemble.

Ici, les limites du débattement angulaire entre les rondelles de guidage 20C, 21C du préamortisseur C et le voile 22C de celui-ci sont définies par la venue en butée des extrémités circonférentielles des échancrures 36 du voile 22B de l'amortisseur intermédiaire B avec les cannelures 18 de l'élément de sortie 12.

Les moyens de frottement 25A de l'amortisseur principal A comportent, outre la rondelle de guidage 20B de l'amortisseur intermédiaire B, une rondelle de frottement 45, qui, de l'autre côté du voile 22A par rapport à la rondelle de guidage 20B, est au contact de ce voile 22A.

Les moyens élastiques à action axiale 26A associés sont constitués, ici, par une rondelle Belleville qui prend appui sur la rondelle de guidage 21A.

Ici, la rondelle de frottement 45 s'étend sensiblement à niveau avec la rondelle de guidage 20B, et, donc, à distance de l'élément de sortie 12.

Ici, cette rondelle de frottement 45 présente, axialement, des tenons 46, qui, par rapport à elle, sont déportés radialement en direction opposée à l'élément de sortie 12, et par lesquels elle est calée en rotation sur la rondelle de guidage 21A, ces tenons 46 étant en prise avec des évidements 48 prévus à cet effet dans cette rondelle de guidage 21A.

Avantageusement, les tenons 46 traversent de part en part la rondelle de guidage 21A, et, conformés en crochets élastiquement déformables 49 au-delà de cette rondelle de guidage 21A, ils sont aptes à un encliquetage sur celle-ci, pour la formation d'un sous-ensemble avec elle.

Ce sous-ensemble ne relevant pas de la présente invention, il ne sera pas décrit plus en détail ici.

Les tenons 46 sont en outre mis à profit pour le centrage de la rondelle Belleville constituant les moyens élastiques à action axiale 26A.

Ici, les moyens de frottement 25C du préamortisseur C comportent, d'une part, un palier 50, qui intervient entre l'élément de sortie 12 et la rondelle de guidage 20A de l'amortisseur principal A, pour le centrage de cette rondelle de guidage 20A, et qui, par une portée tronconique 51, porte sur la portée tronconique 17 de l'élément de sortie 12, et, d'autre part, à l'autre extrémité de cet élément de sortie 12, une rondelle de frottement 52, qui, éventuellement par l'intermédiaire d'une rondelle d'interposition non représentée, porte sur l'épauiement transversal 19 de cet élément de sortie 12.

Le long de sa périphérie interne, cette rondelle de frottement 52 présente, axialement, des tenons 53 par lesquels elle est calée en rotation sur la rondelle de guidage 21A de l'amortisseur principal A, ces tenons 53 étant en prise avec des encoches 54 prévues à cet effet à la périphérie interne de cette rondelle de guidage 21A.

De même, par des tenons non visibles sur les figures, le palier 50 est calé en rotation sur la rondelle de guidage 20C du préamortisseur C.

Ici, les moyens élastiques à action axiale 26C associés sont formés par une rondelle Belleville, qui est centrée par les tenons 53, et qui, par des encoches 55, est en prise avec ceux-ci.

Suivant l'invention, les moyens élastiques à action axiale 26B de l'amortisseur intermédiaire B sont disposés radialement entre les organes élastiques à action circonférentielle 23B de cet amortisseur intermédiaire B et ceux 23C du préamortisseur C.

Ici, les rondelles de guidage 20C, 21C du préamortisseur C sont montées mobiles axialement l'une par rapport à l'autre, et les moyens élastiques à action axiale 26B de l'amortisseur intermédiaire B sont disposés axialement entre elles.

Ces moyens élastiques à action axiale 26B sollicitent donc axialement en écartement l'une par rapport à l'autre les rondelles de guidage 20C, 21C du préamortisseur C.

Corollairement, les moyens de frottement 25B de l'amortisseur intermédiaire B comportent, d'une part, une première rondelle de frottement 57, qui est interposée axialement entre son voile 22B et l'une de ses rondelles de guidage 20B, 21B, en l'espèce la rondelle de guidage 21B formée par le voile 22A de l'amortisseur principal A, et, d'autre part, une deuxième rondelle de frottement 58, qui est interposée axialement entre la rondelle de guidage 20C du préamortisseur C la plus éloignée du voile 22A de l'amortisseur principal A et la rondelle de guidage 20A de cet amortisseur principal A la plus proche de cette rondelle de guidage 20C.

Ici, cette deuxième rondelle de frottement 58 est d'un seul tenant avec le palier 50, et elle comporte des fenêtres 59 dans lesquelles les organes élastiques à action circonférentielle 23C sont axialement engagés, au bénéfice d'une réduction de l'encombrement axial de l'ensemble.

De même, la première rondelle de frottement 57 comporte des fenêtres 60 dans lesquelles les organes élastiques à action circonférentielle 23C sont axialement engagés, au bénéfice d'une réduction de l'encombrement axial de l'ensemble.

Ici, les moyens élastiques à action axiale 26B de l'amortisseur intermédiaire B sont disposés radialement entre le voile 22C du préamortisseur C et les organes élastiques à action circonférentielle 23B de l'amortisseur intermédiaire B.

Avantageusement, l'une des rondelles de guidage 20C, 21C du préamortisseur C comporte une portion annulaire 61 décalée axialement en direction de l'autre, et les moyens élastiques à action axiale 26B de l'amortisseur intermédiaire B sont disposés à niveau avec cette portion annulaire 61 décalée.

Ici, la rondelle de guidage 20C, 21C comportant une telle portion annulaire 61 décalée est la rondelle de guidage 20C, c'est-à-dire celle qui est la plus éloignée du voile 22A de l'amortisseur principal A.

Avantageusement, cette portion annulaire 61 décalée intervient à la périphérie externe de la rondelle de guidage 20C, et c'est donc elle qui présente les encoches 41 avec lesquelles sont en prise les pattes axiales 40 de la rondelle de guidage 21C.

Par son décalage, la portion annulaire 61 de la rondelle de guidage 20C permet avantageusement de réduire la longueur des pattes axiales 40 de la rondelle de guidage 21C.

Ici, les moyens élastiques à action axiale 26B de l'amortisseur intermédiaire B sont formés par une rondelle Belleville, qui est centrée sur les pattes axiales 40 de la rondelle de guidage 21C, et qui comporte elle-même des encoches 62 par lesquelles elle est calée en rotation sur ces pattes axiales 40.

Il résulte de ce qui précède que, de l'autre côté du voile 22A de l'amortisseur principal A, interviennent, d'une part, des moyens de frottement, dits ci-après premiers moyens de frottement, qui appartiennent aux moyens de frottement 25A de l'amortisseur principal A, et qui sont constitués, en l'espèce, par la rondelle de frottement 45, et, d'autre part, des moyens de frottement, dits ci-après troisièmes moyens de frottement, qui appartiennent aux moyens de frottement 25C du préamortisseur C, et qui sont décalés radialement par rapport aux premiers moyens de frottement, ces troisièmes moyens de frottement étant constitués, en l'espèce, par la rondelle de frottement 52.

Suivant l'invention, la rondelle de guidage 21A correspondante de l'amortisseur principal A comporte, entre les premiers moyens de frottement que constitue la rondelle de frottement 45 et les troisièmes moyens de frottement que constitue la rondelle de frottement 52, une portion annulaire 63 qui est décalée axialement en direction du voile 22A de l'amortisseur principal A.

Par construction, la raideur des organes élastiques à action circonférentielle 23C du préamortisseur C est plus faible que celle des organes élastiques à action circonférentielle 23B de l'amortisseur intermédiaire B, et celle-ci est elle-même plus faible que celle des organes élastiques à action circonférentielle 23A de l'amortisseur principal A.

Avantageusement, les organes 23B exerce au début de leur intervention un couple plus faible que celui exercé par les organes 23C à la fin de leur intervention. De même, les organes 23A exerce au début de leur intervention un couple plus faible que celui exercé par les organes 23B à la fin de leur intervention.

Par construction, également, la raideur des moyens élastiques à action axiale 26C du préamortisseur C est plus faible que celle des moyens élastiques à action axiale 26B de l'amortisseur intermédiaire B, et celle-ci est elle-même plus faible que celle des moyens élastiques à action axiale 26A de l'amortisseur principal A.

Lorsque, en fonctionnement, l'élément d'entrée 11 et l'élément de sortie 12 sont sollicités en rotation l'un par rapport à l'autre, seuls se compriment, dans un premier temps, les organes élastiques à action circonférentielle 23C du préamortisseur C.

Seuls, interviennent, conjointement, les moyens de frottement 25C de ce préamortisseur C.

En effet, par les organes élastiques à action circonférentielle 23B de l'amortisseur intermédiaire B et ceux 23A de l'amortisseur principal A, les rondelles de guidage 20C, 21C de ce préamortisseur C sont alors solidaires en rotation des rondelles de guidage 20A, 21A de l'amortisseur A sur lesquelles est calée en rotation la rondelle de frottement 52 constituant ces moyens de frottement 25C, et, par l'intermédiaire de la rondelle de guidage 20C du préamortisseur C, il en est de même du palier 50.

Dans un deuxième temps, les organes élastiques à action circonférentielle 23B de l'amortisseur intermédiaire B se compriment à leur tour, cependant que les organes élastiques à action circonférentielle 23C du préamortisseur C demeurent comprimés.

Conjointement, les moyens de frottement 25B de l'amortisseur intermédiaire B ajoutent leurs effets à ceux des moyens de frottement 25C du préamortisseur C.

En effet, les rondelles de guidage 20B, 21B de l'amortisseur intermédiaire B se débattent alors angulairement par rapport aux rondelles de guidage 20A, 21A et au voile 22A de l'amortisseur principal A, et les rondelles de frottement 57, 58 constituant ces moyens de frottement 25B interviennent entre elles et ces derniers.

Dans un troisième temps, enfin, les organes élastiques à action circonférentielle 23A de l'amortisseur principal A se compriment à leur tour, cependant que les organes élastiques à action circonférentielle 23B de l'amortisseur intermédiaire B et ceux 23C du préamortisseur C demeurent comprimés.

Conjointement, les moyens de frottement 25A de l'amortisseur principal A entrent à leur tour en action, en ajoutant leurs effets aux moyens de frottement 25C du préamortisseur C, cependant que seule une partie des moyens de frottement 25B de l'amortisseur intermédiaire B, en l'espèce la rondelle de frottement 58, continue à intervenir.

En effet, les organes élastiques à action circonférentielle 23C du préamortisseur C et ceux 23B de l'amortisseur intermédiaire B solidarisent alors en rotation à l'élément de sortie 12 les rondelles de guidage 20C, 21C, 20B, 21B, et, donc, le voile 22A, seuls se débattent alors par rapport à l'ensemble précédent les rondelles de guidage 20A, 21A de l'amortissement principal A de l'élément d'entrée 11.

Il résulte de ce qui précède que, lors d'un débattement angulaire entre l'élément d'entrée 11 et l'élément de sortie 12, le préamortisseur C, qui est placé directement en amont de l'élément de sortie 12, est le premier à entrer en action, que l'amortisseur intermédiaire B est le deuxième à entrer en action, et que l'amortisseur principal A, qui est cinématiquement directement attaqué par l'élément d'entrée 11, est le troisième et dernier à entrer en action.

Il résulte également de ce qui précède que les trois amortisseurs A, B, C sont montés en série.

Si désiré, leurs organes élastiques à action circonférentielle 23A, 23B, 23C peuvent être montés avec précontrainte dans leurs logements (fenêtres 30, 38, 43 ou creusures 37) respectifs.

Pour éviter des discontinuités dans le fonctionnement, le couple final du préamortisseur C peut être alors supérieur à la précontrainte des organes élastiques à action circonférentielle 23B de l'amortisseur intermédiaire B, et le couple final de cet amortisseur intermédiaire B peut être alors lui-même supérieur à la précontrainte des organes élastiques à action circonférentielle 23A de l'amortisseur principal A.

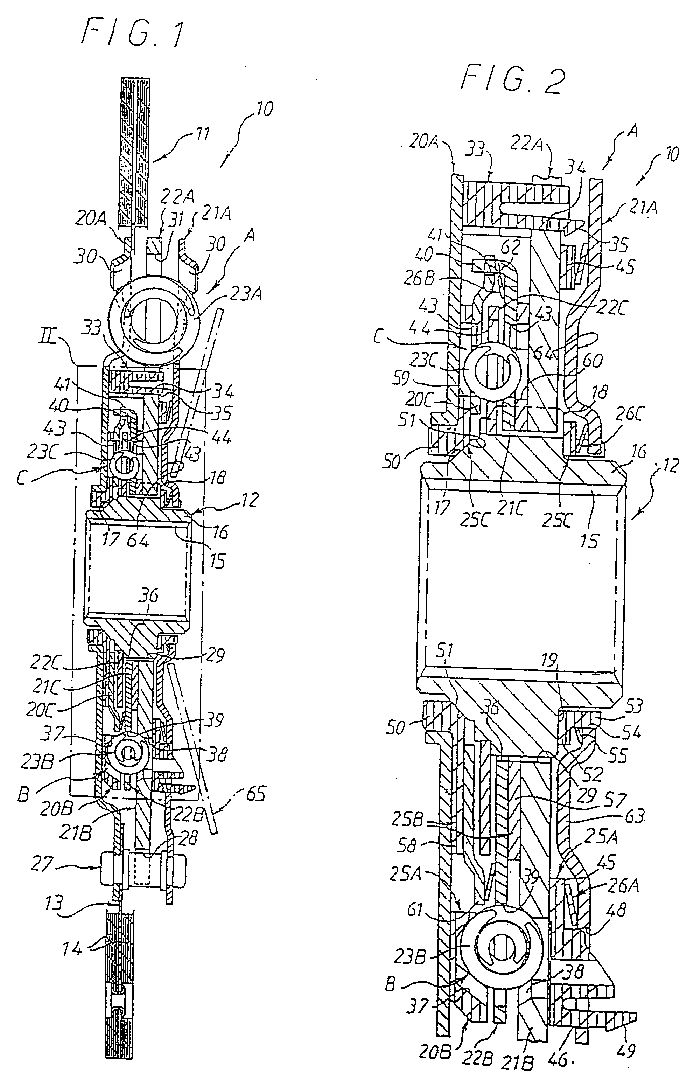

Par ailleurs, le dispositif amortisseur de torsion 10 suivant l'invention comporte, au niveau de la portion annulaire 63 décalée de la rondelle de guidage 21A de l'amortisseur principal A, qui est celle des rondelles de guidage 20A, 21A qui est la plus éloignée de l'élément d'entrée 11, un dégagement 64 dans lequel peut pénétrer, tel que schématisé en traits interrompus sur la figure 1, le dispositif de commande 65 assurant par ailleurs la commande en engagement ou en dégagement de l'embrayage concerné.

Par exemple, et tel que schématisé sur la figure 1, ce dispositif de commande 65 est constitué par les doigts d'un diaphragme.

Comme indiqué, les crochets 35 et 49 permettent la création de sous-ensembles.

Avantageusement, ces crochets 35, 49 sont venus de moulage avec les tenons 33, 46 correspondants, en étant préférentiellement moins larges circonférentiellemenc que ceux-ci pour ne pas participer à la transmission du couple et ainsi être ménagés.

Si désiré, la rondelle de frottement 57 peut présenter à sa périphérie interne une denture mâle pour engrener avec les cannelures 18 de l'élément de sortie 12.

Ainsi qu'on l'appréciera, c'est, en toute hypothèse, grâce aux pattes axiales 40 de la rondelle de guidage 21C et aux encoches 41 de la rondelle de guidage 200 qu'est obtenue ici une liaison en rotation avec mobilité axiale pour ces rondelles de guidage 20C, 21C, et, donc, un frottement.

L'invention ne se limite d'ailleurs pas à la forme de réalisation décrite et représentée, mais englobe toute variante d'exécution dans le cadre des revendications.

Par exemple, les moyens élastiques à action axiale mis en oeuvre peuvent être au moins en partie constitués par une rondelle ondulée.

## Revendications

1. Dispositif amortisseur de torsion comportant, entre un élément d'entrée (11) et un élément de sortie (12) montés rotatifs l'un par rapport à l'autre, trois amortisseurs (A, B, C), qui, cinématiquement, entrent successivement en action lors d'un débattement angulaire entre cet élément d'entrée (11) et cet élément de sortie (12), à savoir, dans l'ordre inverse de leurs entrées en action, un amortisseur principal (A), un amortisseur intermédiaire (B), et un préamortisseur (C), chacun de ces amortisseurs (A, B, C) comportant deux rondelles de guidage (20A-21A, 20B-21B, 20C-21C), qui, disposées axialement de part et d'autre d'un voile (22A, 22B, 22C), sont montés rotatifs par rapport à celui-ci, des organes élastiques à action circonférentielle (23A, 23B, 23C), qui sont interposés circonférentiellement entre les rondelles de guidage (20A-21A, 20B-21B, 20C-21C) et le voile (22A, 22B, 22C), et des moyens de frottement (25A, 25B, 25C), qui, intervenant entre les rondelles de guidage (20A-21A, 20B-21B, 20C-21C) et le voile (22A, 22B, 22C) ou des pièces solidaires en rotation de ceux-ci, sont soumis à des moyens élastiques à action axiale (26A, 26B, 26C), **caractérisé en ce que** les moyens élastiques à action axiale (26B) de l'amortisseur intermédiaire (B) sont disposés radialement entre les organes élastiques à action circonférentielle (23B) de cet amortisseur intermédiaire (B) et ceux (23C) du préamortisseur (C).

2. Dispositif amortisseur de torsion suivant la revendication 1, **caractérisé en ce que**, l'une des rondelles de guidage (20C, 21C) du préamortisseur (C) étant formée par le voile (22B) de l'amortisseur intermédiaire (B), ces rondelles de guidage (20C, 21C) sont montées mobiles axialement l'une par rapport à l'autre, et les moyens élastiques à action axiale (26B) de l'amortisseur intermédiaire (B) sont disposés axialement entre elles.

3. Dispositif amortisseur de torsion suivant la revendication 2, **caractérisé en ce que** les moyens élastiques à action axiale (26B) de l'amortisseur intermédiaire (B) sont disposés radialement entre le voile (22C) du préamortisseur (C) et les organes élastiques à action circonférentielle (23B) de l'amortisseur intermédiaire (B).

4. Dispositif amortisseur de torsion suivant la revendication 3, **caractérisé en ce que** l'une des rondelles de guidage (20C, 21C) du préamortisseur (C) comporte une portion annulaire (61) décalée axialement en direction de l'autre, et les moyens élastiques à action axiale (26B) de l'amortisseur intermédiaire (B) sont disposés à niveau avec cette portion annulaire (61) décalée.

5. Dispositif amortisseur de torsion la revendication 3, **caractérisé en ce que** les moyens de frottement (25B) de l'amortisseur intermédiaire (B) comportent une première rondelle de frottement (57), qui est interposée axialement entre son voile (22B) et l'une de ses rondelles de guidage (20B, 21B), et une deuxième rondelle de frottement (58), qui est interposée axialement entre la rondelle de guidage (20C) du préamortisseur (C) la plus éloignée du voile (22A) de l'amortisseur principal (A) et la rondelle de guidage (20A) de l'amortisseur principal (A) la plus proche de cette rondelle de guidage (20C).

6. Dispositif amortisseur de torsion suivant la revendication 5, **caractérisé en ce que** la première rondelle de frottement (57) de l'amortisseur intermédiaire (B) comporte des fenêtres (60) dans lesquelles les organes élastiques à action circonférentielle (23C) du préamortisseur (C) sont axialement engagés.

7. Dispositif amortisseur de torsion suivant la revendication 5 **caractérisé en ce que** la deuxième rondelle de frottement (58) de l'amortisseur intermédiaire (B) comporte des fenêtres (59) dans lesquelles les organes élastiques à action circonférentielle (23C) du préamortisseur (C) sont axialement engagés.

8. Dispositif amortisseur de torsion suivant la revendication 1, **caractérisé en ce que** les moyens élastiques à action axiale (26B) de l'amortisseur intermédiaire (B) sont formés par une rondelle Belleville et **en ce que**, l'une des rondelles de guidage (20C, 21C) du préamortisseur (C) comportant des pattes axiales (40) par lesquelles elle est en prise avec des encoches (41) de l'autre, la rondelle Belleville formant les moyens élastiques à action axiale (25B) de l'amortisseur intermédiaire (B) comporte elle-même des encoches (62) par lesquelles elle est calée en rotation sur ces pattes axiales (40).

9. Dispositif amortisseur de torsion suivant la revendication 1, **caractérisé en ce que** le préamortisseur (C) et l'amortisseur intermédiaire (B) étant l'un et l'autre disposés axialement d'un même côté du voile (22A) de l'amortisseur principal (A), tandis que, de l'autre côté de ce voile (22A), interviennent des moyens de frottement, dits premiers moyens de frottement, qui appartiennent aux moyens de frottement (25A) de l'amortisseur principal (A), et des moyens de frottement, dits troisièmes moyens de frottement, qui appartiennent aux moyens de frottement (25C) du préamortisseur (C) et qui sont décalés radialement par rapport aux premiers moyens de frottement, la rondelle de guidage (21A) correspondante de l'amortisseur principal (A) comporte, entre lesdits premiers moyens de frottement et lesdits troisièmes moyens de frottement, une portion annulaire (63) qui est décalée axialement en direction du voile (22A) de l'amortisseur principal (A).

10. Dispositif amortisseur de torsion la revendication 1, **caractérisé en ce que** la rondelle de guidage (20B) de l'amortisseur intermédiaire (B) la plus éloignée, axialement, du voile (22A) de l'amortisseur principal (A) présentant, axialement, des tenons (33) par lesquels elle est calée en rotation sur ce voile (22A), ces tenons (33) traversent de part en part ce voile (22A), et, conformés en crochets élastiquement déformables (35) au-delà de ce voile (22A), ils sont aptes à un encliquetage sur celui-ci.

## Patentansprüche

1. Drehschwingungsdämpfervorrichtung, umfassend, zwischen einem Eingangselement (11) und einem Ausgangselement (12), die drehbar 'im Verhältnis zueinander gelagert sind, drei Dämpfer (A, B, C), die bei einer Winkelauslenkung zwischen diesem Eingangselement (11) und diesem Ausgangselement (12) kinematisch nacheinander wirksam werden, und zwar, in der umgekehrten Reihenfolge ihres Wirksamwerdens, einen Hauptdämpfer (A), einen Zwischendämpfer (B) und einen Vordämpfer (C), wobei jeder dieser Dämpfer (A, B, C) zwei Führungsscheiben (20A-21A, 20B-21B, 20C-21C) umfasst, die axial beiderseits einer Mitnehmerscheibe (22A, 22B, 22C) angeordnet und im Verhältnis zu dieser drehbar gelagert sind, umfangsmäßig wirksame elastische Organe (23A, 23B, 23C), die umfangsmäßig zwischen den Führungsscheiben (20A-21A, 20B-21B, 20C-21C) und der Mitnehmerscheibe (22A, 22B, 22C) eingefügt sind, und Reibungsmittel (25A, 25B, 25C), die zwischen den Führungsscheiben (20A-21A, 20B-21B, 20C-21C) und der Mitnehmerscheibe (22A, 22B, 22C) oder drehfest mit diesen verbundenen Teilen zum Einsatz kommen und axial wirksamen elastischen Mitteln (26A, 268, 26C) ausgesetzt sind, **dadurch gekennzeichnet, dass** die axial wirksamen elastischen Mittel (26B) des Zwischendämpfers (B) radial zwischen den umfangsmäßig wirksamen elastischen Organen (23B) dieses Zwischendämpfers (B) und denjenigen (23C) des Vordämpfers (C) angeordnet sind.

2. Drehschwingungsdämpfervorrichtung nach Anspruch 1, **dadurch gekennzeichnet, dass**, während eine der Führungsscheiben (20C, 21C) des Vordämpfers (C) durch die Mitnehmerscheibe (22B) des Zwischendämpfers (B) gebildet wird, diese Führungsscheiben (20C, 21C) im Verhältnis zueinander axial beweglich gelagert sind und die axial wirksamen elastischen Mittel (26B) des Zwischendämpfers (B) axial zwischen ihnen angeordnet sind.

3. Drehschwingungsdämpfervorrichtung nach Anspruch 2, **dadurch gekennzeichnet, dass** die axial wirksamen elastischen Mittel (26B) des Zwischendämpfers (B) radial zwischen der Mitnehmerscheibe (22C) des Vordämpfers (C) und den umfangsmäßig wirksamen elastischen Mitteln (23B) des Zwischendämpfers (B) angeordnet sind.

4. Drehschwingungsdämpfervorrichtung nach Anspruch 3, **dadurch gekennzeichnet, dass** eine der Führungsscheiben (20C, 21C) des Vordämpfers (C) einen in Richtung der anderen Führungsscheibe axial versetzten ringförmigen Abschnitt (61) umfaßt und die axial wirksamen elastischen Mittel (26B) des Zwischendämpfers (B) auf einer Höhe mit diesem versetzten ringförmigen Abschnitt (61) angeordnet sind.

5. Drehschwingungsdämpfervorrichtung nach Anspruch 3, **dadurch gekennzeichnet, dass** die Reibungsmittel (25B) des Zwischendämpfers (B) eine erste Reibscheibe (57), die axial zwischen seiner Mitnehmerscheibe (22B) und einer seiner Führungsscheiben (20B, 21B) eingefügt ist, und eine zweite Reibscheibe (58) umfassen, die axial zwischen der am weitesten von der Mitnehmerscheibe (22A) des Hauptdämpfers (A) entfernten Führungsscheibe (20C) des Vordämpfers (C) und der am nächsten an dieser Führungsscheibe (20C) befindlichen Führungsscheibe (20A) des Hauptdämpfers (A) eingefügt ist.

6. Drehschwingungsdämpfervorrichtung nach Anspruch 5, **dadurch gekennzeichnet,dass** die erste Reibscheibe (57) des Zwischendämpfers (B) Fenster (60) umfasst, in denen die umfangsmäßig wirksamen elastischen Organe (23C) des Vordämpfers (C) axial eingesetzt sind.

7. Drehschwingungsdämpfervorrichtung nach Anspruch 5, **dadurch gekennzeichnet, dass** die zweite Reibscheibe (58) des Zwischendämpfers (B) Fenster (59) umfasst, in denen die umfangsmäßig wirksamen elastischen Organe (23C) des Vordämpfers (C) axial eingesetzt sind.

8. Drehschwingungsdämpfervorrichtung nach Anspruch 1, **dadurch gekennzeichnet, dass** die axial wirksamen elastischen Mittel (26B) des Zwischendämpfers (B) durch eine Tellerfeder gebildet werden und dass, während eine der Führungsscheiben (20C, 21C) des Vordämpfers (C) axiale Ansätze (40) umfasst, durch die sie mit Ausnehmungen (41) der anderen Führungsscheibe in Eingriff kommt, die Tellerfeder, die die axial wirksamen elastischen Mittel (26B) des Zwischendämpfers (B) bildet, selbst Ausnehmungen (62) umfasst, durch die sie drehfest an diesen axialen Ansätzen (40) angebracht ist.

9. Drehschwingungsdämpfervorrichtung nach Anspruch 1, **dadurch gekennzeichnet, dass**, insoweit der Vordämpfer (C) und der Zwischendämpfer (B) beide axial auf der gleichen Seite der Mitnehmerscheibe (22A) des Hauptdämpfers (A) angeordnet sind, während auf der anderen Seite dieser Mitnehmerscheibe (22A) als erste Reibungsmittel bezeichnete Reibungsmittel, die zu den Reibungsmitteln (25A) des Hauptdämpfers (A) gehören, und hier als dritte Reibungsmittel bezeichnete Reibungsmittel zum Einsatz kommen, die zu den Reibungsmitteln (25C) des Vordämpfers (C) gehören und die im Verhältnis zu den ersten Reibungsmitteln radial versetzt sind, die entsprechende Führungsscheibe (21A) des Hauptdämpfers (A) zwischen den besagten ersten Reibungsmitteln und den besagten dritten Reibungsmitteln einen ringförmigen Abschnitt (63) umfasst, der in Richtung der Mitnehmerscheibe (22A) des Hauptdämpfers (A) axial versetzt ist.

10. Drehschwingungsdämpfervorrichtung nach Anspruch 1, **dadurch gekennzeichnet, dass**, während die axial am weitesten von der Mitnehmerscheibe (22A) des Hauptdämpfers (A) entfernte Führungsscheibe (20B) des Zwischendämpfers (B) axial Zapfen (33) aufweist, durch die sie drehfest an dieser Mitnehmerscheibe (22A) angebracht ist, diese Zapfen (33) von einer Seite zur anderen durch diese Mitnehmerscheibe (22A) hindurchgehen und in der Gestaltung als elastisch verformbare Haken (35) jenseits dieser Mitnehmerscheibe (22A) an dieser verrastet werden können.

## Claims

1. A torsion damping device comprising, between an input element (11) and an output element (12) which are mounted for rotation of one with respect to the other, three dampers (A, B, C) which enter dynamically into action during angular displacement between the said input element (11) and the said output element (12), namely, in the reverse order of their entry into action, a main damper (A), an intermediate damper (B), and a predamper (C), each of the said dampers (A, B, C) having two guide rings (20A-21A, 20B-21B, 20C-21C) which are disposed axially on either side of a damper plate (22A, 22B, 22C) and are mounted for rotation with respect to the latter, circumferentially acting resilient members (23A, 23B, 23C) which are interposed circumferentially between the guide rings (20A-21A, 20B-21B, 20C-21C) and the damper plate (22A, 22B, 22C), and friction means (25A, 25B, 25C) which are interposed operatively between the guide rings (20A-21A, 20B-21B, 20C-21C) and damper plate (22A, 22B, 22C) or members coupled with these latter for rotation therewith, and are subject to axially acting resilient means (26A, 26B, 26C); **characterised in that** the axially acting resilient means (26B) of the intermediate damper (B) are disposed circumferentially between the circumferentially acting resilient members (23B) of the said intermediate damper (B) and those (23C) of the predamper (C).

2. A torsion damping device according to Claim 1, **characterised in that** one of the guide rings (20C, 21C) of the predamper (C) is defined by the damper plate (22B) of the intermediate damper (B), and the said guide rings (20C, 21C) are mounted for axial movement of one with respect to the other, while the axially acting resilient means (26B) of the intermediate damper(B) are disposed between them.

3. A torsion damping device according to Claim 2, **characterised in that** the axially acting resilient means (26B) of the intermediate damper (B) are disposed radially between the damper plate (22C) of the predamper (C) and the circumferentially acting resilient means (23B) of the intermediate damper (B).

4. A torsion damping device according to Claim 3, **characterised in that** one of the guide rings (20C, 21C) of the predamper (C) includes an annular portion (61) which is offset axially towards the other one, and the axially acting resilient means (26B) of the intermediate damper (B) are disposed level with the said offset annular portion (61).

5. A torsion damping device according to Claim 3, **characterised in that** the friction means (25B) of the intermediate damper (B) comprise a first friction ring (57), which is interposed axially between its damper plate (22B) and one of its guide rings (20B, 21B), and a second friction ring (58) which is interposed axially between the guide ring (20C) of the predamper (C) which is the one further away from the damper plate (22A) of the main damper (A) and the guide ring (20A) of the main damper (A) which is the nearer one to the said guide ring (20C).

6. A torsion damping device according to Claim 5, **characterised in that** the first friction ring (57) of the intermediate damper (B) has windows (60) in which the circumferentially acting resilient means (23C) of the predamper (C) are engaged axially.

7. A torsion damping device according to Claim 5, **characterised in that** the second friction ring (58) of the intermediate damper (B) has windows (59) in which the circumferentially acting resilient means (23C) of the predamper (C) are engaged axially.

8. A torsion damping device according to Claim 1, **characterised in that** the axially acting resilient means (26B) of the intermediate damper (B) are defined by a Belleville ring, and **in that**, one of the guide rings (20C, 21C) of the predamper (C) including axial lugs (40) by means of which it is in engagement with notches (41) in the other one, the Belleville ring which constitutes the axially acting resilient means (26B) of the intermediate damper (B) is itself formed with notches (62) by means of which it is mounted in rotation on the said axial lugs (40).

9. A torsion damping device according to Claim 1, **characterised in that**, both the intermediate damper (B) and the predamper (C) being disposed on the same side of the damper plate (22A) of the main damper (A), while operatively interposed on the other side of the said damper plate (22A) are friction means referred to as first friction means, which are part of the friction means (25A) of the main damper (A), together with friction means referred to as third friction means, which are part of the friction means (25C) of the predamper (C) and which are offset radially with respect to the first friction means, the corresponding guide ring (21A) of the main damper (A) includes, between the said first friction means and the said third friction means, an annular portion (63) which is offset axially towards the damper plate (22A) of the main damper (A).

10. A torsion damping device according to Claim 1, **characterised in that** the guide ring (20B) of the intermediate damper (B) that is the one axially further away from the damper plate (22A) of the main damper (A) has axially extending tenons (33) by means of which it is mounted in rotation on the said damper plate (22A), and, being configured as elastically deformable hooks (35) beyond the said damper plate (22A), they are adapted for snap-fitting on the latter.
